# EUROPÄISCHE PATENTSCHRIFT

(11) **EP 1 121 549 B1**
(45) Veröffentlichungstag und Bekanntmachung des Hinweises auf die Patenterteilung: **17.09.2003**
(21) Anmeldenummer: 99955864.6
(22) Anmeldetag: 20.10.1999
(51) Int. Cl.: F16K 27/06, B29C 45/14

(54) **ABSPERRVENTIL AUS KUNSTSTOFF SOWIE VERFAHREN ZU DESSEN HERSTELLUNG**
PLASTIC STOP VALVE AND METHOD FOR THE PRODUCTION THEREOF
VANNE D'ARRET EN MATIERE PLASTIQUE ET SON PROCEDE DE FABRICATION

(30) Priorität: 20.10.1998 DE 19848339; 24.09.1999 DE 19945960
(43) Veröffentlichungstag der Anmeldung: 08.08.2001
(73) Patentinhaber: Plasson Armaturen GmbH, 99084 Erfurt (DE)
(72) Erfinder: TAPPE, Michael, W., D-40221 Düsseldorf (DE)
(74) Vertreter: Hofmeister, Frank Horst
(86) Internationale Anmeldenummer: EP9907964
(87) Internationale Veröffentlichungsnummer: WO00023738

(56) Entgegenhaltungen:
- EP-A- 0 575 643
- DE-A- 4 442 979

## Beschreibung

Die Erfindung betrifft ein Verfahren zur Herstellung eines Absperrventils für Rohrleitungen mit einem aus Kunststoff bestehenden, zwei Rohranschlußstutzen aufweisenden Gehäuse, in dem ein über eine Betätigungseinheit zwischen einer Durchflußstellung und einer Sperrstellung verstellbares Absperrelement zumindest mittels Lagerringen und Dichtringen gelagert ist, wobei ein das Absperrelement, die Lager- und Dichtringe, eine Lagerbuchse und eine Einlage aufweisendes Innenteil im vormontierten Zustand zur Ausbildung des Gehäuses unter der Verwendung eines Adhäsionsmittels mit Kunststoff umspritzt wird. Weiterhin betrifft die Erfindung ein nach diesem Verfahren hergestelltes Absperrventil.

Ein solches Verfahren zur Herstellung eines Absperrventils ist beispielsweise aus der DE 44 42 979 A1 bekannt. Bei diesem bekannten Verfahren werden in einem ersten Verfahrensschritt zunächst die Kugel sowie zum Teil die Schaltwelle sowie der untere Teil des Lagerzapfens mit einer Ummantelung aus Kunststoff umspritzt. In einem nachfolgenden Arbeitsschritt wird eine elastische Einlage auf der Außenseite der im ersten Schritt hergestellten Kunststoffummantelung zwischen den Flanschbereichen angeordnet und im nachfolgenden Arbeitsschritt aus Kunststoff das Ventilgehäuse auf die mit der elastischen Einlage versehene Ummantelung aufgespritzt. Dieses Verfahren zur Hersteilung eines Kunststoffgehäuses für ein Absperrventil ist sehr aufwendig, da ein komplett zweiteiliges Ventilgehäuse aus Kunststoff hergestellt werden muß. Die verwendete elastische Einlage soll dazu dienen, eine Trennung zwischen innerer Ummantelung und äußerem Ventilgehäuse zu bewirken, während außerhalb des Bereichs der elastischen Einlage die beiden Kunststoffe der inneren Ummantelung und des äußeren Ventilgehäuses stoffschlüssig miteinander verbunden sind. Insbesondere durch die Ausbildung des komplett zweiteiligen Ventilgehäuses, bestehend aus innerer Ummantelung und äußerem Ventilgehäuse, ist dieses bekannte Verfahren wirtschaftlich kaum zu verwerten.

Ein weiteres Verfahren zur Herstellung eines Kugelventils mit einem aus Kunststoff bestehenden Gehäuse ist aus der EP-0 575 643-B1 bekannt. Bei diesem bekannten Verfahren wird zur Erzeugung des Kunststoffgehäuses des vormontierte Innenteil im vormontierten Zustand in eine die äußere Form des Gehäuses und die Durchflußweite der Rohranschlußstutzen erzeugende Spritzform eingelegt und anschließend mit Kunststoff umspritzt. Diese Art der Herstellung des Kunstgehäuses, bei dem das komplette Ventil In ein Außenund ein Innenteil aufgeteilt wird, hat sich in der Praxis durchaus bewährt Durch die Aufteilung in das vormontierte Innenteil und das aufzuspritzende Außenteil wird bei der Abkühlung des in der Spritzform erzeugten Gehäuses eine Kontraktion der beiden Gehäuseteile relativ zueinander erzwungen und ein Schrumpfen des Gehäuses radial nach innen verhindert, womit ein Klemmen der Ventilkugel im Gehäuse verbunden wäre.

Insbesondere bei der Verwendung eines solchermaßen hergestellten Absperrventils bei Rohrleitungen mit einem großen Durchmesser der Rohranschlußstutzen und bei hohen Förderdrücken in den Rohrleitungen, insbesondere bei der Verwendung als Gasabsperrventil, kann es in der Praxis vorkommen, daß trotz des geschlossenen Absperrventils eine Leckage am Absperrventil dadurch auftritt, daß sich das abzusperrende Medium zwischen Innenteil und Außenteil, d. h. zwischen der Außenseite des Absperrelements sowie der Lager- und Dichtringe und der Innenseite des Kunststoffgehäuses hindurchzwängt. Solche Leckagen sind insbesondere bei der Verwendung der Armaturen zum Absperren von Gasleitungen unbedingt zu vermeiden.

Davon ausgehend liegt der Erfindung die **Aufgabe** zugrunde, ein Verfahren zur Herstellung eines Absperrventils für Rohrleitungen mit einem aus Kunststoff bestehenden Gehäuse derart zu verbessern, daß kein abzusperrendes Medium zwischen Innenteil und Außenteil des Ventils hindurchtreten kann und darüber hinaus die Fertigung einfach und kostengünstig durchzuführen ist. Weiterhin liegt der Erfindung die Aufgabe zugrunde, ein nach diesem Verfahren hergestelltes Absperrventil bereitzustellen.

Die verfahrensmäßige **Lösung** dieser Aufgabenstellung ist gekennzeichnet durch die Verfahrensschritte:
a) Erzeugen eines im wesentlichen die Außenform der Einlage und die Innenform des Gehäuses im Bereich der Einlage bildenden Formteils aus einem Kunststoff mittels Spritzgießen;
b) Auf- und Einspritzen eines die Einlage bildenden Kunststoffes auf bzw. in das im Verfahrensschritt a) erzeugte Formteil unter gleichzeitiger Ausbildung einer Schmelzschweißverbindung zwischen dem Kunststoff des Formteils und dem Material der Einlage;
c) Montieren des aus dem Absperrelement, den Lagerringen, den Dichtringen, der Lagerbuchse und der Einlage (mitsamt Formteil) bestehenden Innenteils des Absperrventils und Einlegen des Innenteiles in eine Spritzform,
d) Umspritzen des im Verfahrensschritt c) vormontierten innenteils mit Kunststoff unter gleichzeitiger Ausbildung einer Schmelzschweißverbindung zwischen dem Kunststoff des zumindest teilweise die Innenform des Gehäuses bildenden Formteils und dem Material des Gehäuses.

Das erfindungsgemäße Verfahren zeichnet sich dadurch aus, daß das Adhäsionsmittel, welches zum Verbinden von Innenteil und Außenteil des Absperrventils verwendet wird, gleichzeitig als Formteil für die Außenform der Einlage und die Innenform des Gehäuses im Bereich der Einlage dient. Das im ersten Verfahrensschritt hergestellte Formteil aus einem Kunststoff wird bei dem nachfolgenden Umspritzen bzw. Aufspritzen zur Ausbildung der Einlage und des Ventilgehäuses teilweise durch den jeweils aufgespritzten Kunststoff aufgeschmolzen, so daß sich eine stoffschlüssige Schmelzschweißverbindung zwischen Formteil und Einlage einerseits und Formteil und Ventilgehäuse andererseits ergibt

Durch diese stoffschlüssige Verbindung zwischen Innenteil und Innenseite des Gehäuses (des Außenteils) wird sichergestellt, daß die aus dem Stand der Technik beschriebenen Leckagen vermieden werden.

Gemäß einer praktischen Ausführungsform der Erfindung wird als Kunststoff für das Formteil ein thermoplastischer Kunststoff verwendet. Die thermoplastischen Kunststoffe haben dabei den Vorteil, daß sie durch die beim Umspritzen des Innenteils mit Kunststoff auftretende Wärme in einen plastischen und fließfähigen Zustand übergehen und sich so sehr gut den Außenkonturen des Innenteils und den Innenkonturen des Außenteils anpassen und eine Verschweißung zwischen beiden bewerkstelligen.

Gemäß einer bevorzugten Ausführungsform der Erfindung wird als Kunststoff für das Formteil ein Adhäsions-Copolymer verwendet. Die Adhäsions-Copolymere zeichnen sich dadurch aus, daß sie sich bei entsprechender Ausrüstung sehr gut mit anderen Kunststoffen, insbesondere Polyäthylen, verbinden und daß beim direkten Aufspritzen eines Kunststoffes auf ein Adhäsions-Copolymer dieses teilweise aufschmilzt und sich eine Schmelzschweißverbindung zwischen den beiden Kunststoffen ausbildet. Da als Kunststoff für das Ventilgehäuse vorzugsweise Polyäthylen verwendet wird, sind gerade die Adhäsions-Copolymere als Adhäsionsmittel besonders gut geeignet.

Das nach dem vorhergehend beschriebenen Verfahren hergestellte Absperrventil für Rohrleitungen mit einem aus Kunststoff bestehenden, zwei Rohranschlußstutzen aufweisenden Gehäuse, in dem ein über eine Betätigungseinheit zwischen einer Durchflußstellung und einer Sperrstellung verstellbares Absperrelement zumindest mittels Lagerringen und Dichtringen gelagert ist, wobei ein das Absperrelement, die Lager- und Dichtringe, eine Lagerbuchse und eine Einlage aufweisendes Innenteil im vormontierten Zustand zur Ausbildung des Gehäuses unter Verwendung eines Adhäsionsmittels mit Kunststoff umspritzbar ist, ist erfindungsgemäß dadurch gekennzeichnet, dass das Innenteil und das Gehäuse (Außenteil) zumindest teilweise über ein aus einem Kunststoff spritzgegossenes Formteil, das der Außenform der Einlage und der Innenform des Gehäuses im Bereich der Einlage entspricht und einen Teil des Innenteils bildet, stoffschlüssig miteinander verbunden sind.

Erst durch die erfindungsgemäße stoffschlüssige Verbindung zwischen dem Innenteil des Absperrventils und dem das Kunststoffgehäuse bildenden Außenteil des Absperrventils ist es möglich, einer inneren Leckage des Absperrventils entgegenzuwirken, die darin besteht, daß sich das durch das Absperrventil abgesperrte Medium zwischen der Außenseite des Innenteils und der Innenseite des Außenteils hindurchdrückt. Zusätzlich wird die Statik des Gesamtventils durch die stoffschlüssige Verbindung von Innenteil und Kunststoffummantelung nachhaltig verbessert.

Schließlich wird mit der Erfindung vorgeschlagen; daß bei einem erfindungsgemäßen Absperrventil mit einer die Lageringe miteinander verbindenden Einlage in der Einlage eine Mehrzahl von Durchbrüchen ausgebildet sind, um zusätzliche Verankerungspunkte für eine formschlüssige Verbindung zwischen Gehäuse (Außenteil) und Innenteil zu schaffen. Beim Aufschmelzen des als Adhäsionsmittel dienenden spritzgegossenen Formteils dringt dieses in die Durchbrüche der Einlage ein und verkrallt sich somit formschlüssig in der Einlage. Neben der durch das Schmelzschweißen erfolgten stoffschlüssigen Verbindung wird somit zusätzlich noch eine formschlüssige Verbindung bereitgestellt.

Weitere Merkmale und Vorteil der Erfindung ergeben sich aus der nachfolgenden Beschreibung der zugehörigen Zeichnung, in der ein Längsschnitt durch ein Kugelventil beispielhaft dargestellt ist.

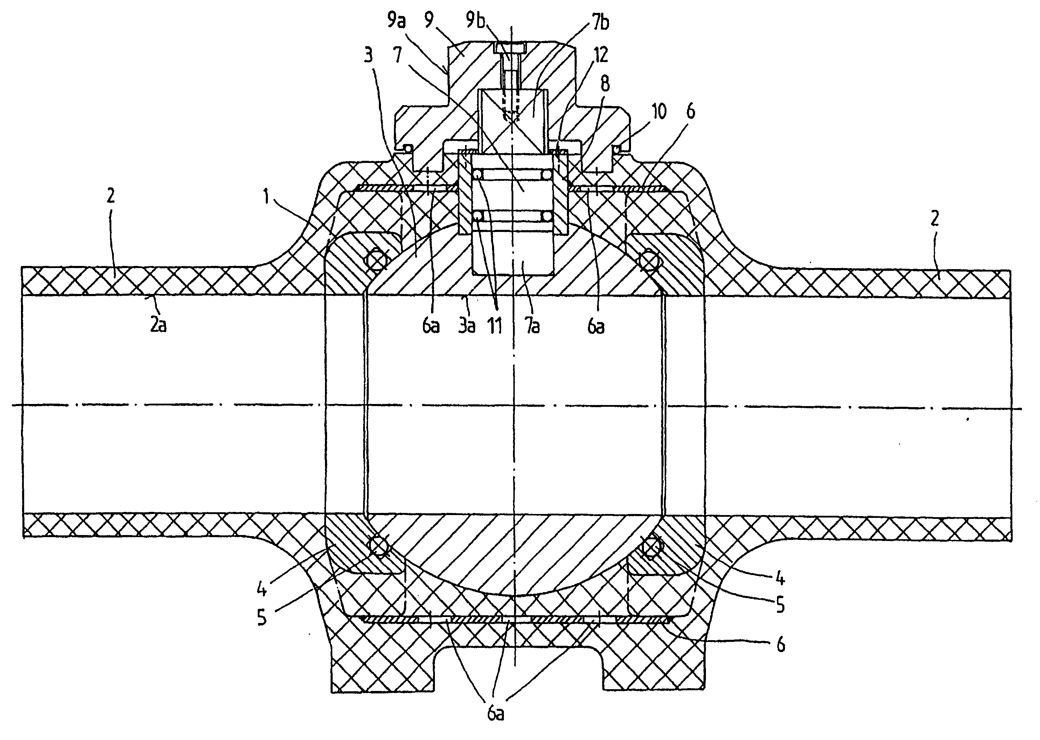

Das in dem Ausführungsbeispiel dargestellte Kugelventil umfaßt ein Gehäuse 1 aus Kunststoff, vorzugsweise Polyäthylen, an dem zwei in entgegengesetzte Richtungen weisende Anschlußstutzen 2 einstückig angeformt sind. Diese Rohranschlußstutzen 2 dienen zur Verbindung des Kugelventils mit einer auf der Zeichnung nicht dargestellten, ebenfalls aus Kunststoff hergestellten Leitung. Das Gehäuse 1 kann am Ende der Rohranschlußstutzen 2 auch mit Anschraubflanschen versehen sein.

Im Inneren des Gehäuses 1 ist eine als Absperrelement dienende Ventilkugel 3 angeordnet, die mit einer Durchflußbohrung 3a versehen ist, welche der Durchflußweite 2a der Rohranschlußstutzen 2 entspricht. Die Ventilkugel 3 ist mittels zweier Lagerringe 4 gelagert, die zur Abdichtung gegenüber der Ventilkugel 3 jeweils mit einem Dichtring 5 versehen sind.

Außerdem sind die Lagerringe 4 an der verbleibenden Umfangsfläche durch eine ringförmige Einlage 6 miteinander verbunden. Diese Verbindung kann beispielsweise durch Kleben oder Schweißen erzeugt werden. In der Abbildung sind beispielhaft Schweißnähte eingezeichnet.

Um die in der Abbildung in der Durchgangsstellung gezeichnete Ventilkugel 3 zur Drosselung oder für den Abschluß der Durchflußweite 2a verdrehen zu können, ist im Gehäuse 1 eine Schaltwelle 7 angeordnet, die drehbar in einer Lagerbuchse 8 gelagert ist. Die Schaltwelle 7 greift mittels eines Kupplungsstückes 7a in eine entsprechende Ausnehmung der Ventilkugel 3 ein, so daß diese Ventilkugel 3 mittels der Schaltwelle 7 zwischen einer Durchflußstellung und einer Sperrstellung verdreht werden kann. Zu diesem Zweck ist am außen liegenden Ende der Schaltwelle 7 ein Vierkant 7b oder Mehrkant ausgebildet. Neben diesem dargestellten Antrieb für die Ventilkugel sind die unterschiedlichsten Betätigungseinheiten zum Betrieb der Absperrelemente möglich. So ist es beispielsweise möglich, die als Ventilkugeln oder Keilschieber ausgebildeten Absperrelemente auch maschine II über elektrische, pneumatische oder hydraulische Antriebe zu verstellen. Beim dargestellten Ausführungsbeispiel ist auf den Vierkant 7b der Schaltwelle 7 ein mit Schlüsselflächen 9a ausgebildeter Schaltdom 9 aufgesetzt, der durch eine Schraube 9b unverdrehbar an der Schaltwelle 7 befestigt ist. Das in das Gehäuse 1 hineinragende Ende des Schaltdomes 9 ist gegenüber dem Gehäuse 1 verdrehbar und zusätzlich durch eine Dichtung 10 abgedichtet.

Die Lagerbuchse 8 zur Lagerung der Schaltwelle 7 ist in einer entsprechenden Aussparung der ringförmigen Einlage 6 angeordnet. Bei dem dargestellten Ausführungsbeispiel sind die Lagerbuchse 8 und die Einlage 6 miteinander verschweißt. Zur Abdichtung der Schaltwelle 7 gegenüber der Lagerbuchse 8 sind beim Ausführungsbeispiel zwei Ringdichtungen 11 vorgesehen.

Je nach Einsatzzweck können die Lagerringe 4, die Ventilkugel 3, die Einlage 6 und die Lagerbuchse 8 aus Rotguß, Messing, Edelstahl oder Kunststoff, vorzugsweise glasfaserverstärkten Kunststoffen oder Polypropylen, hergestellt sein. Es ist auch die Verwendung unterschiedlicher Materialien oder Materialkombinationen für die voranstehend aufgeführten Teile möglich, sofern sichergestellt ist, daß die Teile miteinander verbunden werden können. Für die Dichtringe 5 und die Ringdichtungen 11 sowie die Dichtung 10 wird vorzugsweise Nitrilbutyl-Kautschuk verwendet. Die Schaltwelle 7 kann ebenfalls aus einem geeigneten Material, wie beispielsweise Rotguß, Messing, Edelstahl oder Kunststoff, hergestellt werden.

Um das in der Abbildung dargestellte Kugelventil herzustellen, wird in einem ersten Verfahrensschritt mittels Spritzgießen aus einem Kunststoff, vorteilhafterweise ein Adhäsions-Copolymer, ein Formteil hergestellt, das im wesentlichen der Außenform der Einlage 6 und der Innenform des Gehäuses 1 im Bereich der Einlage 6 entspricht. Anschließend wird der die ringförmige Einlage 6 bildende Kunststoff auf und in das im vorhergehenden Verfahrensschritt hergestellte Formteil auf- bzw. eingespritzt, wodurch bei der Verwendung von Adhäsions-Copolymeren zur Ausbildung des Formteils diese teilweise aufgeschmolzen werden und sich bei dem Spritzvorgang zur Ausbildung der ringförmigen Einlagen 6 eine Schmelzschweißverbindung zwischen dem Kunststoff des Formteils und dem Material der ringförmigen Einlage 6 ausbildet.

Anschließend wird an dieser solchermaßen hergestellten Einlage 6 die Lagerbuchse 8 befestigt. Anschließend werden die mit den Dichtringen 5 versehenen Lagerringe 4 auf die Ventilkugel 3 aufgesetzt und mittels der ringförmigen Einlage 6 miteinander verbunden.

In diesem vormontierten Zustand werden die das Innenteil des Absperrventils bildenden Teile, nämlich die Ventilkugel 3, die Lagerring 4, die Dichtringe 5, die Lagerbuchse 8 und die ringförmige Einlage 6 mitsamt dem Formteil aus dem als Adhäsionsmittel dienenden Kunststoff in eine auf der Zeichnung nicht dargestellte, die äußere Form des Gehäuses 1 erzeugende Spritzform eingelegt und mit Kunststoff, vorzugsweise Polyäthylen, umspritzt. Bei diesem erneuten Spritzvorgang wird das Material des als Innenform für das Gehäuse dienenden Formteils erneut aufgeschmolzen, so daß sich auch zwischen dem Kunststoff des Gehäuses 1 und dem Kunststoff des Formteils eine Schmelzschweißverbindung ausbildet. Damit der Kunststoff des Gehäuses 1 in radialer Richtung bis an die Ventilkugel 3 gelangen kann, sind in der Einlage 6 eine Mehrzahl von Durchbrüchen 6a vorgesehen.

Durch die Anordnung der die Lagerringe 4 miteinander verbindenden und die Lagerbuchse 8 für die Schaltwelle 7 tragenden Einlage 6 innerhalb des in der Spritzform erzeugten Gehäuses 1 erfolgt eine Art Aufteilung des Ventils in ein das Gehäuse 1 bildendes Außenteil und ein von dem Gehäuse 1 umschlossenes Innenteil, obwohl sich in der Spritzform ein einstückiges Gehäuse mit angeformten Rohranschlußstutzen 2 ergibt.

Durch die Verwendung des aus einem Kunststoff bestehenden Formteils zur Ausbildung der Außenkontur der ringförmigen Einlage 6 und der Innenkontur des Gehäuses 1 im Bereich der ringförmigen Einlage 6-ergibt sich eine stoffschlüssig abdichtende Verbindung zwischen dem Innenteil und der Innenteile des das Außenteil bildenden Gehäuses 1, so daß ein Hindurchtreten des abzusperrenden Med i-ums zwischen Innenteil und Innenseite des Außenteils verhindert wird.

Nach der voranstehend beschriebenen Herstellung des einstückig mit den Rohranschlußstutzen 2 ausgebildeten Gehäuses 1 aus Kunststoff wird die Schaltwell e 7 mit ihren Ringdichtungen 11 in die Lagerbuchse 8 derart eingesetzt, daß ihr Kupplungsstück 7a in die entsprechende Aussparung der Ventilkugel 3 eingreift. Anschließend wird auf die außenliegende Stirnfläche der Lagerbuchse 8 ein Lagerring 12 aufgeschraubt, der aufgrund der zwischen dem Vierkant 7b und dem Mittelstück der Schaltwelle 7 ausgebildeten Schulter ein Heraustreten der Schaltwelle 7 aus der Lagerbuchse 8 verhindert. Beim Ausführungsbeispiel wird schließlich der Schaltdom 9 auf den Vierkant 7b der Schaltwelle 7 aufgesetzt und mittels der Schraube 9b befestigt. Das Kugelventil ist betriebsbereit und kann mit den Stirnflächen seiner beiden Rohranschlußstutzen 2 in die jeweilige Kunststoffleitung, insbesondere eine Gasversorgungsleitung, eingesetzt werden.

Wie aus der Abbildung ersichtlich, ergibt sich bei dem dargestellten Ausführungsbeispiel ein Kugelventil mit einem einteiligen Kunststoffgehäuse 1 und einer Durchflußbohrung 3a der Ventilkugel 3, welche der Durchflußweite 2a der Rohranschlußstutzen 2 entspricht, so daß keinerlei Drosselverluste innerhalb des geöffneten Kugelventils auftreten. Durch die stoffschlüssige Verbindung zwischen den das Innenteil bildenden Teilen 3, 4, 5, 6 und 8 sowie dem Kunststoff des Gehäuses 1 entfällt die Gefahr von Undichtigkeiten dadurch, daß das abzudichtende Medium zwischen dem Innenteil und dem Außenteil hindurchtreten könnte. Somit ist sichergestellt, daß auch bei hohen Drücken des abzusperrenden Mediums eine wirklich leckagefreie innere Abdichtung durch ein solchermaßen hergestelltes Absperrventil gewährleistet ist.

### Bezugszeichenliste

- 1: Gehäuse
- 2: Rohranschlußstutzen
- 2a: Durchflußweite
- 3: Ventilkugel, Absperrelemet
- 3a: Durchflußbohrung
- 4: Lagerring
- 5: Dichtring
- 6: Einlage
- 6a: Durchbruch
- 7: Schaltwelle
- 7a: Kupplungsstück
- 7b: Vierkant
- 8: Lagerbuchse
- 9: Schaltdom.
- 9a: Schlüsselfläche
- 9b: Schraube
- 10: Dichtung
- 11: Ringdichtung
- 12: Lagerring

## Patentansprüche

1. Verfahren zur Herstellung eines Absperrventils für Rohrleitungen mit einem aus Kunststoff bestehenden, zwei Rohranschlußstutzen (2) aufweisenden Gehäuse (1), in dem ein über eine Betätigungseinheit zwischen einer Durchflußstellung und einer Sperrstellung verstellbares Absperrelement (3) zumindest mittels Lagerringen (4) und Dichtringen (5) gelagert ist, wobei ein das Absperrelement (3), die Lager- und Dichtringe (4, 5), eine Lagerbuchse (8) und eine Einlage (6) aufweisendes Innenteil im vormontierten Zustand zur Ausbildung des Gehäuses (1) unter Verwendung eines Adhäsionsmittels mit Kunststoff umspritzt wird,
**gekennzeichnet durch**
die folgenden Verfahrensschritte:
a) Erzeugen eines im wesentlichen die Außenform der Einlage (6) und die Innenform des Gehäuses (1) im Bereich der Einlage (6) bildenden Formteils aus einem Kunststoff mittels Spritzgießens;
b) Auf- und Einspritzen eines die Einlage (6) bildenden Kunststoffes auf bzw. in das im Verfahrensschritt a) erzeugte Formteil unter gleichzeitiger Ausbildung einer Schmelzschweißverbindung zwischen dem Kunststoff des Formteils und dem Material der Einlage (6);
c) Montieren des aus dem Absperrelement (3), den Lagerringen (4), den Dichtringen (5), der Lagerbuchse (8) und der Einlage (6) (mitsamt Formteil) bestehenden Innenteils des Absperrventils und Einlegen des Innenteils in eine Spritzform und
d) Umspritzen des im Verfahrensschritt c) vormontierten Innenteils mit Kunststoff unter gleichzeitiger Ausbildung einer Schmelzschweißverbindung zwischen dem Kunststoff des zumindest teilweise die Innenform des Gehäuses (1) bildenden Formteils und dem Material des Gehäuses (1).

2. Verfahren nach Anspruch 1, **dadurch gekennzeichnet, dass** als Kunststoff für das Formteil ein thermoplastischer Kunststoff verwendet wird.

3. Verfahren nach Anspruch 1 oder 2, **dadurch gekennzeichnet, dass** als Kunststoff für das Formteil ein Adhäsions-Copolymer verwendet wird.

4. Absperrventil für Rohrleitungen, insbesondere herstellbar nach dem Verfahren nach einem der Ansprüche 1 bis 3, mit einem aus Kunststoff bestehenden, zwei Rohranschlußstutzen (2) aufweisenden Gehäuse (1), in dem ein über eine Betätigungseinheit zwischen einer Durchflußstellung und einer Sperrstellung verstellbares Absperrelement (3) zumindest mittels Lagerringen (4) und Dichtringen (5) gelagert ist, wobei ein das Absperrelement (3), die Lager- und Dichtringe (4, 5), eine Lagerbuchse (8) und eine Einlage (6) aufweisendes Innenteil im vormontierten Zustand zur Ausbildung des Gehäuses (1) unter Verwendung eines Adhäsionsmittels mit Kunststoff umspritzbar ist,
**dadurch gekennzeichnet,**
**dass** das Innenteil und das Gehäuse (1) (Außenteil) zumindest teilweise über ein aus einem Kunststoff spritzgegossenes Formteil, das der Außenform der Einlage (6) und der Innenform des Gehäuses (1) im Bereich der Einlage (6) entspricht und einen Teil des Innenteils bildet, stoffschlüssig miteinander verbunden sind.

5. Absperrventil nach Anspruch 4 mit einer die Lagerringe (4) miteinander verbindenden Einlage (6), **dadurch gekennzeichnet, dass** in der Einlage (6) und dem spritzgegossenen Formteil eine Mehrzahl von Durchbrüchen (6a) ausgebildet sind, um zusätzliche Verankerungspunkte für die stoffschlüssige Verbindung zwischen dem Gehäuse (1) (Außenteil) und dem Innenteil zu schaffen.

## Claims

1. Method of producing a shut-off valve for pipelines with a casing (1), which consists of plastic, has two pipe connecting pieces (2) and in which a shut-off element (3) which is adjustable between a through-flow position and a shut-off position by means of an actuating unit is mounted at least by means of bearing rings (4) and sealing rings (5), an inner part comprising the shut-off element (3), the bearing and sealing rings (4, 5), a bearing bush (8) and an insert (6) being encapsulated in plastic in the preassembled state, using an adhesive agent, for the forming of the casing (1), **characterized by** the following method steps:
a) producing a moulded part, substantially forming the outer shape of the insert (6) and the inner shape of the casing (1) in the region of the insert (6), from a plastic by means of injection-moulding;
b) spraying and injecting a plastic forming the insert (6) onto and into the moulded part produced in method step a) while at the same time forming a melt-fusion bond between the plastic of the moulded part and the material of the insert (6);
c) assembling the inner part of the shut-off valve comprising the shut-off element (3), the bearing rings (4), the sealing rings (5), the bearing bush (8) and the insert (6) (together with the moulded part) and placing the inner part into a injection mould and
d) encapsulating the inner part preassembled in method step c) in plastic while at the same time forming a melt-fusion bond between the plastic of the moulded part at least partly forming the inner shape of the casing (1) and the material of the casing (1).

2. Method according to Claim 1, **characterized in that** a thermoplastic material is used as the plastic for the moulded part.

3. Method according to Claim 1 or 2, **characterized in that** an adhesion copolymer is used as the plastic for the moulded part.

4. Shut-off valve for pipelines, in particular which can be produced by the method according to one of Claims 1 to 3, with a casing (1), which consists of plastic, has two pipe connecting pieces (2) and in which a shut-off element (3) which is adjustable between a through-flow position and a shut-off position by means of an actuating unit is mounted at least by means of bearing rings (4) and sealing rings (5), it being possible for an inner part comprising the shut-off element (3), the bearing and sealing rings (4, 5), a bearing bush (8) and an insert (6) to be encapsulated in plastic in the preassembled state, using an adhesive agent, for the forming of the casing (1), **characterized in that** the inner part and the casing (1) (outer part) are connected to each other in a material-interlocking manner at least partly by means of a moulded part which is injection-moulded from plastic, corresponds to the outer shape of the insert (6) and the inner shape of the casing (1) in the region of the insert (6) and forms part of the inner part.

5. Shut-off valve according to Claim 4 with an insert (6) connecting the bearing rings (4) to each other, **characterized in that** a plurality of apertures (6a) are formed in the insert (6) and the injection-moulded part, in order to create additional anchoring points for the material-interlocking connection between the casing (1) (outer part) and the inner part.

## Revendications

1. Procédé de fabrication d'une vanne d'arrêt pour des conduites tubulaires, comportant un boîtier (1) constitué en matière plastique et comprenant deux tubulures de raccordement (2), dans lequel est prévu un élément d'arrêt (3) déplaçable via une unité d'actionnement entre une position de passage et une position d'arrêt et monté au moins au moyen de bagues de montage (4) et de joints d'étanchéité annulaires (5), vanne dans laquelle une partie intérieure comprenant l'élément d'arrêt (3), les bagues de montage et d'étanchéité (4, 5), une douille de montage (8), et un insert (6) est surmoulée de matière plastique en utilisant un agent adhésif dans l'état pré-monté pour former le boîtier (1),
**caractérisé par** les étapes suivantes :
a) on réalise une pièce moulée en matière plastique par coulée par injection, laquelle reproduit sensiblement la forme extérieure de l'insert (6) et la forme intérieure du boîtier (1) dans la zone de l'insert (6),
b) on injecte une matière plastique, formant l'insert (6), sur ou dans la pièce moulée générée dans l'étape a) en réalisant simultanément une liaison de soudage par fusion entre la matière plastique de la pièce moulée et le matériau de l'insert (6),
c) on assemble la partie intérieure de la vanne d'arrêt, partie qui est constituée par l'élément d'arrêt (3), les bagues de montage (4), les bagues d'étanchéité (5), la douille de montage (8) et par l'insert (6) (y compris la pièce moulée) et on pose la partie intérieure dans un moule d'injection, et
d) on surmoule la partie intérieure, pré-assemblée dans l'étape c), avec de la matière plastique en réalisant simultanément une liaison de soudage par fusion entre la matière plastique de la pièce moulée reproduisant au moins partiellement la forme intérieure du boîtier (1) et le matériau du boîtier (1).

2. Procédé selon la revendication 1, **caractérisé en ce que** l'on utilise à titre de matière plastique pour la pièce moulée une matière thermoplastique.

3. Procédé selon l'une ou l'autre des revendications 1 et 2, **caractérisé en ce que** l'on utilise à titre de matière plastique pour la pièce moulée un copolymère adhésif.

4. Vanne d'arrêt pour des conduites tubulaires, réalisable en particulier selon le procédé de l'une des revendications 1 à 3, comportant un boîtier (1) constitué en matière plastique et comprenant deux tubulures de raccordement (2), dans lequel est prévu un élément d'arrêt (3) déplaçable via une unité d'actionnement entre une position de passage et une position d'arrêt et monté au moins au moyen de bagues de montage (4) et de joints d'étanchéité annulaires (5), vanne dans laquelle une partie intérieure comprenant l'élément d'arrêt (3), les bagues de montage et d'étanchéité (4, 5), une douille de montage (8) et un insert (6) est susceptible d'être surmoulée de matière plastique en utilisant un agent adhésif dans l'état pré-monté pour former le boîtier (1),
**caractérisée en ce que**
la partie intérieure et le boîtier (1) (partie extérieure) sont reliés par coopération de matières l'un à l'autre au moins partiellement via une pièce moulée par injection en matière plastique qui correspond à la forme extérieure de l'insert (6) et à la forme intérieure du boîtier (1) dans la zone de l'insert (6) et qui forme une portion de la partie intérieure.

5. Vanne d'arrêt selon la revendication 4 comportant un insert (6) reliant les bagues de montage (4) les unes aux autres, **caractérisée en ce qu'**une pluralité de traversées (6a) sont ménagées dans l'insert (6) et dans la partie moulée par injection, afin de créer des points d'ancrage supplémentaires pour la liaison en coopération de matières entre le boîtier (1) (partie extérieure) et la partie intérieure.
